Europäisches Patentamt

European Patent Office

Office européen des brevets

(11) Publication number: **0 332 381**
**A1**

## (12) EUROPEAN PATENT APPLICATION

(21) Application number: 89302234.3

(22) Date of filing: 06.03.89

(51) Int. Cl.⁴: **H 04 N 9/80**
**H 04 N 11/00**

(30) Priority: 08.03.88 JP 54198/88
12.12.88 JP 313406/88

(43) Date of publication of application:
**13.09.89 Bulletin 89/37**

(84) Designated Contracting States: **DE FR GB**

(71) Applicant: **Matsushita Electric Industrial Co., Ltd.**
**1006, Oaza Kadoma**
**Kadoma-shi Osaka-fu, 571 (JP)**

(72) Inventor: **Kobayashi, Masaaki**
**1-224, Nishitadahigashitouge**
**Kawanishi-shi Hyogo-ken, 666-01 (JP)**

**Nagaoka, Yoshitomi**
**11-9, Naritaminamimachi**
**Neyagawa-shi Osaka-fu, 572 (JP)**

**Hamamoto, Yasuo**
**3-14, Miyukihigashimachi**
**Neyagawa-shi Osaka-fu, 572 (JP)**

**Ochi, Atsuo**
**2-146, Honmachi**
**Moriguchi-shi Osaka-fu, 570 (JP)**

(74) Representative: **Crawford, Andrew Birkby et al**
**A.A. THORNTON & CO. Northumberland House 303-306**
**High Holborn**
**London WC1V 7LE (GB)**

(54) **Video signal recording/reproducing apparatus.**

(57) There are provided a line thin-out circuit (2), a time-expansion circuit (3), a time-compression circuit (27), and an interpolation circuit (28) in a video signal recording and reproducing apparatus. The line thin-out circuit (2) produces a video signal in each field of which every other line is omitted, where omitted lines in two consecutive fields are different from each other. The time-expansion (3) circuit expands the time-axis of an output signal of the line thin-out circuit by two times. The time-expanded signal is modulated before being recorded onto a recording medium. A reproduced signal from the recording medium is demodulated and recovered in time-axis by the time-compression circuit (27). Thereafter, the omitted lines are interpolated by the interpolation circuit (28).

**FIG. 1**

EP 0 332 381 A1

## Description

## Video signal recording and reproducing apparatus

The present invention relates to a video signal recording and reproducing apparatus such as a video tape-recorder.

Recently, there have been developed video tape recorders for recording and reproducing a video signal of high resolution (or high definition), e.g. a high-definition television (HDTV) signal. For example, such VTRs are disclosed in "A study of a record and playback system for HDTV digital VTR" by Umemoto et al., 1987 Annual Conference of the Institute of Television Engineers of Japan, 12-3, and in "A VTR recording method for high-definition television signal" by Yamazaki et al., the same, 7-14.

In the prior art, the horizontal frequency band of such a high resolution video signal is widened about two times while the vertical frequency band of the same is also widened about two times, thus about four times in total, as compared with the frequency band of the NTSC, PAL or SECAM signal, for the purpose of recording the high resolution or high definition signal such as the HDTV signal. Thus, the problem is that the consumption of the tape is about four times that of the conventional video tape recorder which records and reproduces the NTSC, PAL or SECAM signal. Even if the recording density is increased about two times with an improved tape-head system, the consumption of the tape will be not less than two times.

It is an object of the present invention to record and reproduce a high resolution video signal such as the HDTV signal without a great increase in the consumption of a recording medium.

The present invention provides, for achieving the object, a system comprising a line thin-out circuit for omitting predetermined lines of an input video signal, a time-expansion circuit for time-expanding an output signal of the line thin-out circuit by a measure of time corresponding to a thin-out ratio determined by the line thin-out circuit, a modulator for modulating an output signal of the time-expansion circuit into an appropriate recordable video signal, a head for recording the recordable video signal onto a recording medium and reproducing the recorded video signal from the recording medium, a demodulator for demodulating a reproduced signal from the head, a time-compression circuit for returning an output signal of the demodulator to the original time-axis, and an interpolator for interpolating the omitted lines of an output signal of the time-compression circuit.

The advantage of the present invention is that the band of a record signal can be expanded in relation to the thin-out rate, so that a video signal of high resolution (or high definition) such as the HDTV signal or the like can be recorded and reproduced without a considerable increase in the consumption of the recording medium.

According to the present invention, if an input HDTV signal has a frequency of 20 MHz at maximum, the frequency of an input signal to the modulator becomes 10 MHz through a preferred line thin-out operation omitting every other line, That is to say, since the HDTV signal is time-expanded two times, record and playback can be carried out with ease.

Fig. 1 is a block diagram showing an arrangement of an embodiment of the present invention;

Fig. 2 is a signal waveform chart showing the waveforms of signals derived from the arrangement of Fig. 1;

Fig. 3 is a block diagram showing an arrangement of a time-expansion circuit 3 of Fig. 1;

Figs. 4a and 13 are block diagrams showing arrangements of an interpolation circuit 28 at Fig. 1;

Fig. 4b is a signal waveform chart showing signals in Fig. 4a;

Figs. 5 and 9 are block diagrams showing arrangements of a line thin-out circuit 2 of Fig. 1;

Figs. 6, 11 and 12 are diagrams showing various constructions of scanning lines according to the invention;

Fig. 7a is a block diagram showing an arrangement of a signal interpolation circuit 33 of Fig. 5;

Fig. 7b is a waveform chart showing signals in Fig. 7a;

Fig. 8 is a block diagram showing an arrangement of a signal interpolation circuit 33' of Fig. 9; and

Fig. 10 is a block diagram showing an arrangement of a control circuit 38 of Fig. 1.

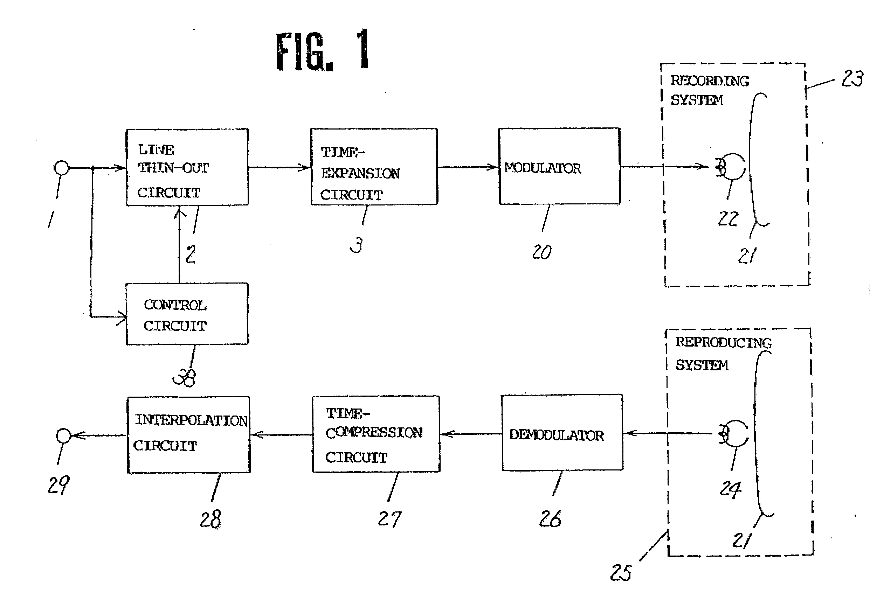

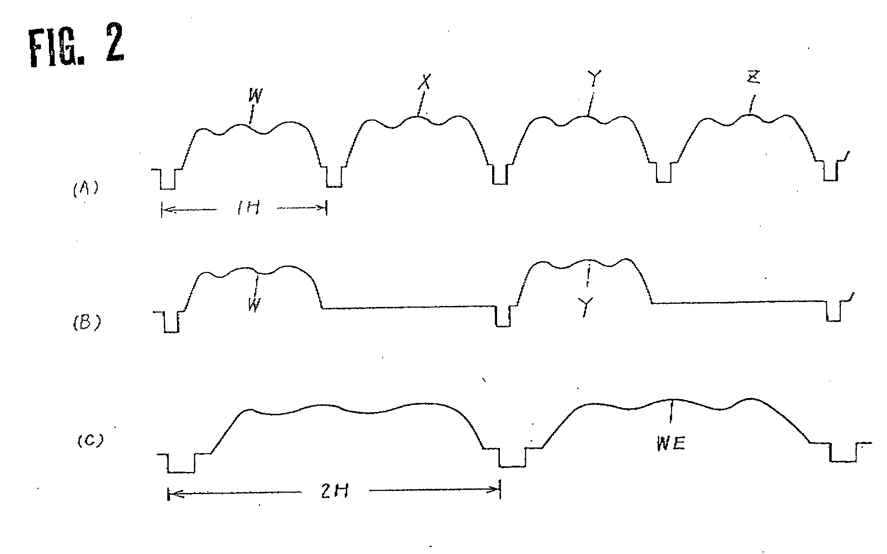

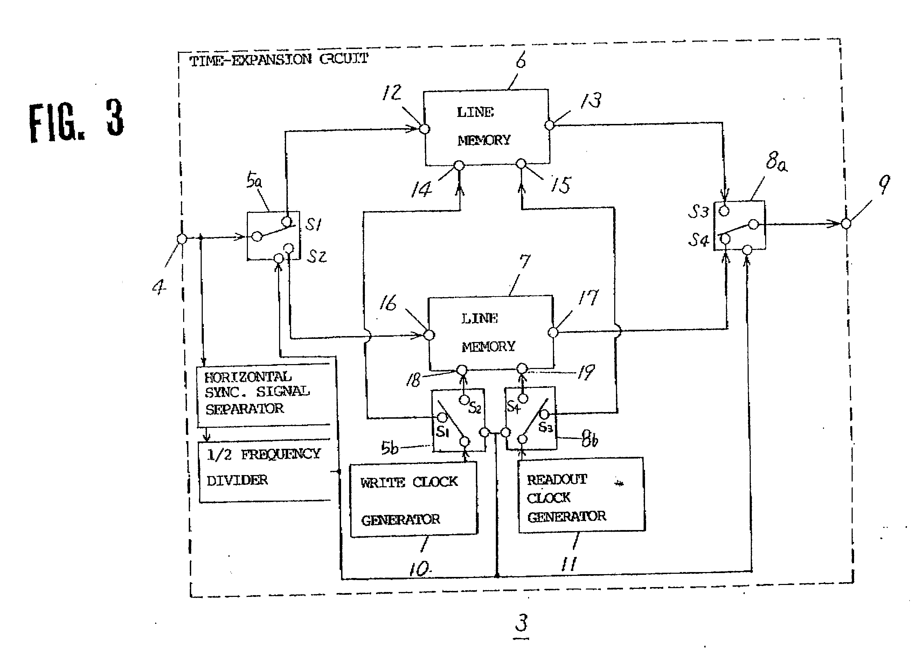

Fig. 1 is a block diagram showing a video signal recording and reproducing apparatus according to the present invention. A video signal of high resolution (or high definition) , e.g. a HDTV signal, is inputted to an input port 1. Although such a video signal which has 1125 horizontal scanning lines in one frame and will be referred to as an HDTV signal hereinafter, is employed in the embodiment, other conventional television signals such as NTSC, PAL, SECAM or MAC signal or a band compression signal of MUSE system can be used with equal success. Additionally, the input HDTV signal represents a luminance signal here as shown by A in Fig. 2 although an actual HDTV signal contains also a color signal. The HDTV signal is converted by a line thin-out circuit 2 into a thinned-out signal in which every other line is omitted as shown by B in Fig. 2. A control circuit 38 will be described in detail later. The line thin-out circuit 2 is arranged to repeat open and close actions at intervals of 1H (H: horizontal scanning period) with the use of a switch circuit (not shown). The thinned-out signal is then inputted to a time-expansion circuit 3 which comprises an input port 4, first switches 5a and 5b, a first line memory 6, a second line memory 7, second switches 8a and 8b, an output port 9, a write clock generator 10, and a readout clock generator 11, as shown in Fig. 3. The first line memory 6 is adapted for time-expansion and has an input port 12, an output port 13, a write clock input port 14, and a readout clock input port 15. The second line memory 7 is also adapted for time-expansion and has an input port 16, an output port 17, a write clock input port 18, and a readout clock input port 19. Both the first and second line memories 6, 7 are constituted by CCDs (charge coupled devices) or by an AD converter, a digital memory, and a DA converter. The movable reeds of the switches 5a, 5b, 8a and 8b are turned to opposite sides at intervals of 2H. The control of the switches 5a, 5b, 8a and 8b is by means of a 1/4 divided signal of the horizontal synchronous signal. For instance, while the switches 5a and 5b are each turned to a side S1, the switches 8a and 8b are each turned to a side S4. When the switches 5a and 5b are turned to S1, the line memory 6 performs a write-in operation to accept a clock signal from the write clock generator 10. More particularly, such a signal W as shown in Fig. 2-B is fed to the line memory 6. As the switches 5a and 5b are each turned to a side S2 after a period of 2H, the switches 8a and 8b are each turned to a side S3. This allows a signal Y of Fig. 2-B to be written into the line memory 7 and the signal W is read out from the line memory 6. At the time, the line memory 7 receives a clock signal from the write clock generator 10 while the line memory 6 receives a clock signal from the readout clock generator 11. The clock frequencies of the write and readout clock signals depend on the time-expansion rate and are designated to be 2:1 ratio here. Each of the clock signals may be produced by an individual oscillator (not shown). More specifically, a PLL circuit may be utilized so that the frequency of the write clock signal is an integral multiplication of the horizontal scanning frequency of an input video signal. Similarly, a flip-flop circuit may be used for producing a readout clock signal by reducing the frequency of the write clock signal to 1/2. Also, a readout clock may be produced by a fixed frequency generator (not shown) for compensation of a time-axial error,

Accordingly, a time-expanded signal as shown by C in Fig. 2 is outputted form the output port 9 of the time-expansion circuit 3. The time-expanded signal is modulated by a modulator 20 to be suitable to a recording system 23 comprising a recording medium (e.g. tape) 21 and a recording head 22, and then recorded onto the recording medium 21. Although the modulator 20 usually performs frequency modulation or pulse code modulation, it may employ other methods of modulation.

The signal recorded on the recording medium 21 is reproduced by a reproducing head 24 during a reproducing operation. The recording head 22 and reproducing head 24 may be either a same head or separate heads. A reproduced signal from the head 24 is demodulated by a demodulator 26 into the pre-modulated signal shown in Fig. 2-C. Then, the reproduced signal is transferred to a time-compression circuit 27 and converted into the thinned signal shown in Fig. 2-B. The time-compression circuit 27 operates in the opposite manner to the time-expansion circuit 3, with the write to readout clock frequency ratio of 1:2 in the same configuration as that shown in Fig. 3.

The thinned signal of Fig. 2-B delivered from the output port of the time-compression circuit 27 is reformed by an interpolation circuit 28 into the signal shown in Fig. 2-A. A time-base correction circuit (or a TBC circuit, not shown) may be interposed between the demodulator 26 and the interpolation circuit 28 in case that a time-axial variation derived from the recording system 23 or the playback system 25 gives a negative effect on the reproducing operation.

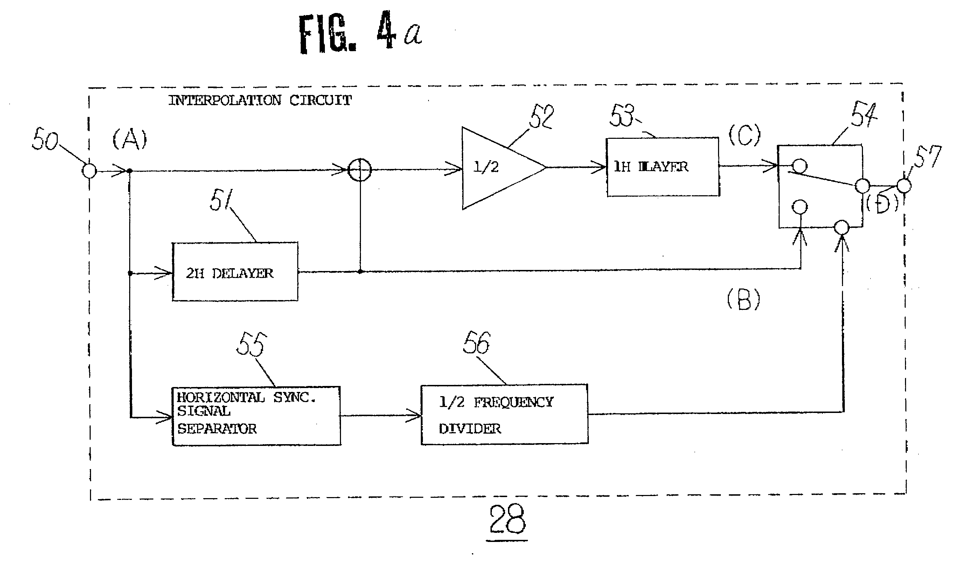

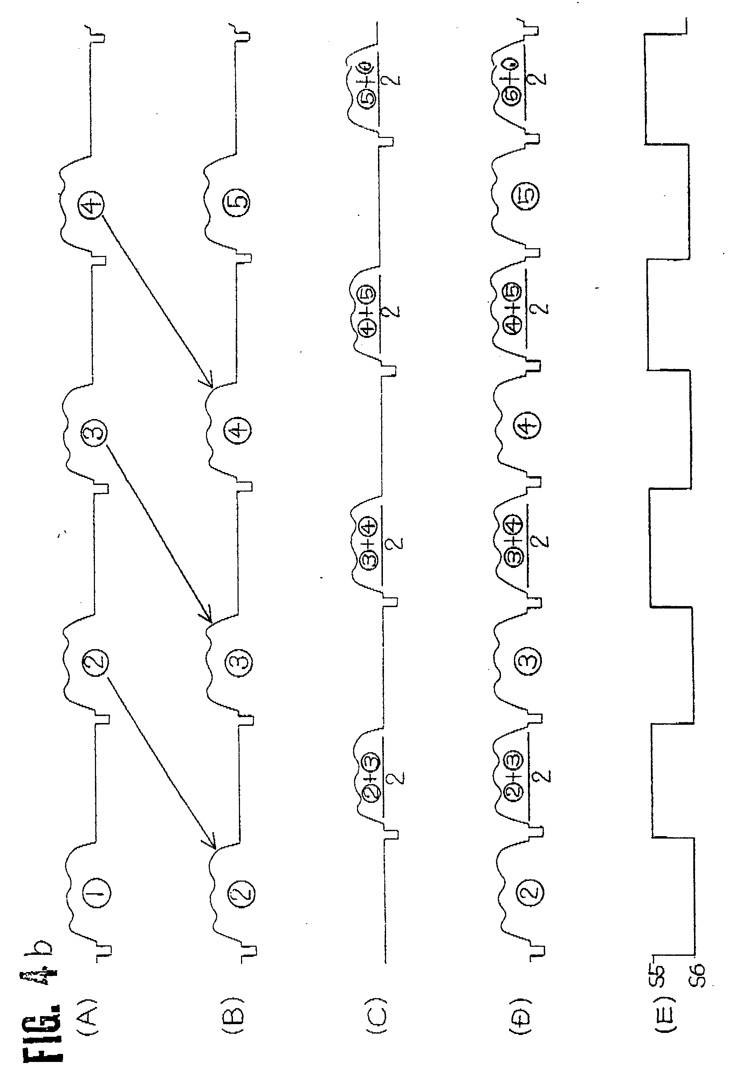

The interpolation circuit 28 comprises an input port 50, a 2H delayer 51, a 1/2 attenuator 52, a 1H delayer 53, a switch 54, a horizontal synchronous signal separator 55, a 1/2 frequency divider 56, and an output port 57 as shown in Fig. 4a. The thinned video signal (in which every other line is missed) fed through the input port 50 (Fig. 4b-A) is delayed 2H by the 2H delayer 51 (Fig. 4b-A) and added to the signal A by an adder. The summed signal is recovered in amplitude by the 1/2 attenuator 52, and then delayed 1H by the 1H delayer 53 (Fig. 4b-C) before transferred to a side S5 of the switch 54. Meanwhile, the 2H-delayed signal from the 2H delayer 51 is supplied to a point S6 of the switch 54. The switch 54 is turned over from S5 to S6 or vice versa at intervals of 1H in response to a control signal (Fig. 4b-E) which is a 1/2 frequency-divided signal of the horizontal synchronous signal, so that a compensated signal in which each missed line is interpolated can be delivered from the output port 57. Accordingly, a signal X of Fig. 2-A is recovered from the signals W and Y of Fig. 2-B. The signal X may be produced by interpolation using the signal of the preceding or following field or frame with the use of a field or frame memory (not shown).

As the result, the original HDTV signal of Fig. 2-A will be resupplied from the output port 29.

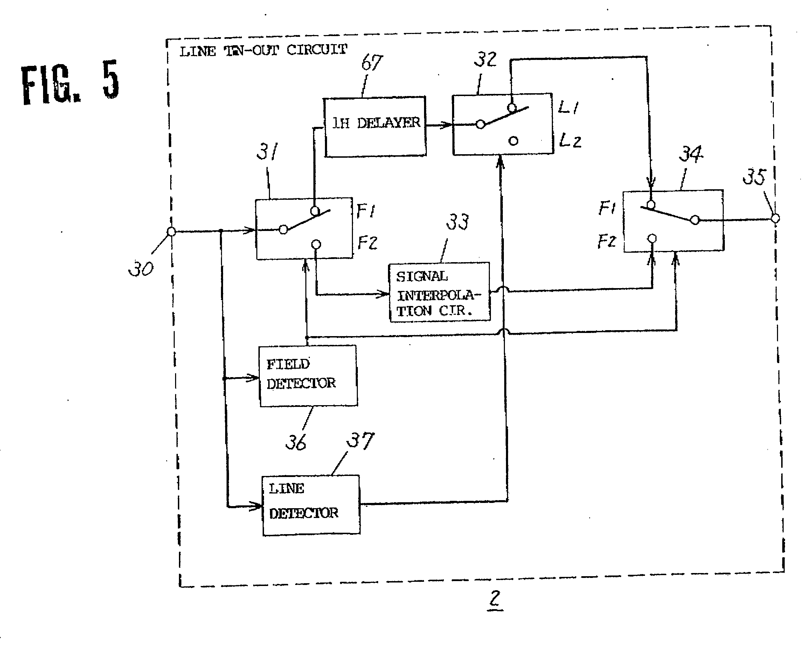

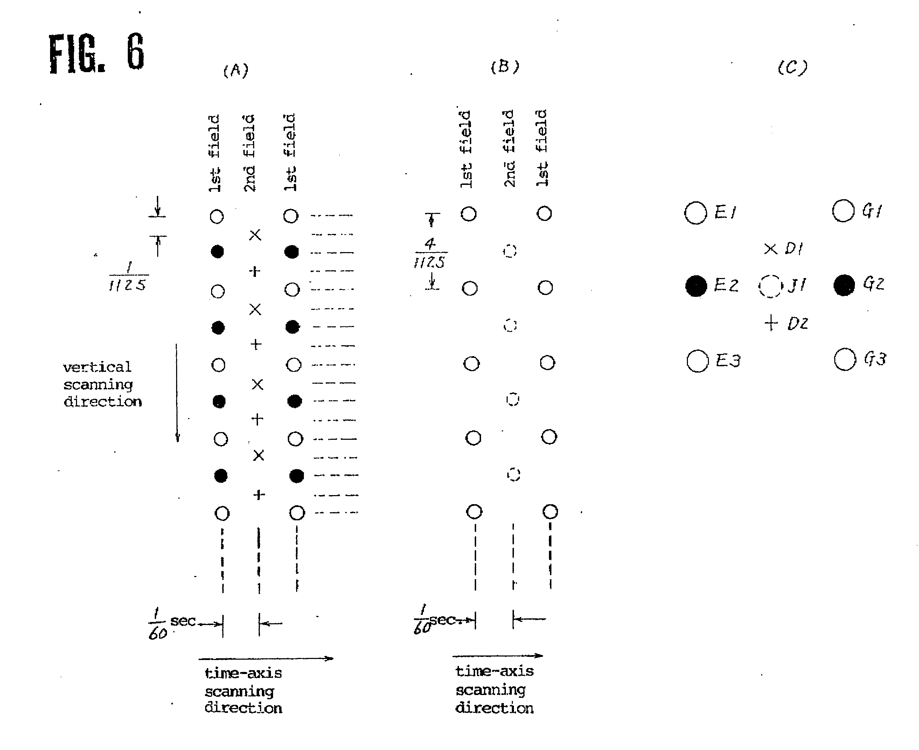

The line thin-out circuit 2 will be described in detail with reference to the block diagram of Fig. 5. The HDTV signal supplied to an input port 30 is transferred to a field switch 31 in the line thin-out circuit 2. The field switch 31 has a control terminal so as to be alternately turned to terminals F1 and F2 at field intervals. The HDTV signal of the first field (as a television signal involves the alternate repetition of a first field and a second field) is transmitted from the terminal F1 via a 1H delayer 67 to a line switch 32. The line switch 32 has a control terminal so as to be turned to terminals L1 and L2 alternately at line intervals. The line switch 32 is connected at the terminal L1 to an output switch 34. The output switch 34 is synchronized in control with the field switch 21 and connected to an output port 35 of the line thin-out circuit 2. When the field switch 31 is turned to the terminal F2, the HDTV signal of the second field is transmitted from the terminal F2 to a signal interpolation circuit 33. The signal interpolation circuit 33 is arranged to supply an interpolation signal, described next, to the output switch 34. The procedure of interpolation will be described with reference to the diagrams of scanning line shown in Figs. 6-A, 6-B and 6-C. The o, ●, x and + marks of Fig. 6-A represent horizontal scanning lines of the HDTV signal viewed in the scanning direction, in which the o and ● scanning lines constitute a first field while the x and + scanning lines constitute a second field. As starting with the first field (an odd-number field), the o scanning line is selected by the line switch 32 and then, its signal is supplied to the output switch 34. Thus, the horizontal scanning line at the (odd-number) first field is given as shown in Fig. 6-B. With respect to the second field, a horizontal line J1 represented by the dotted o mark is produced by the signal interpolation circuit 33 from preceding and following horizontal scanning lines D1 and D2 represented by the x and + marks respectively, as best shown in Fig. 6-C.

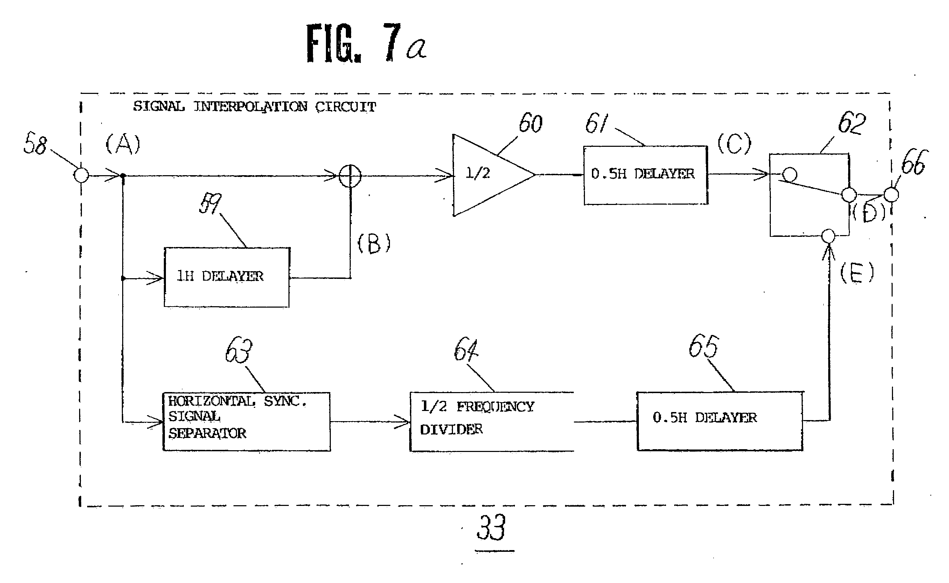

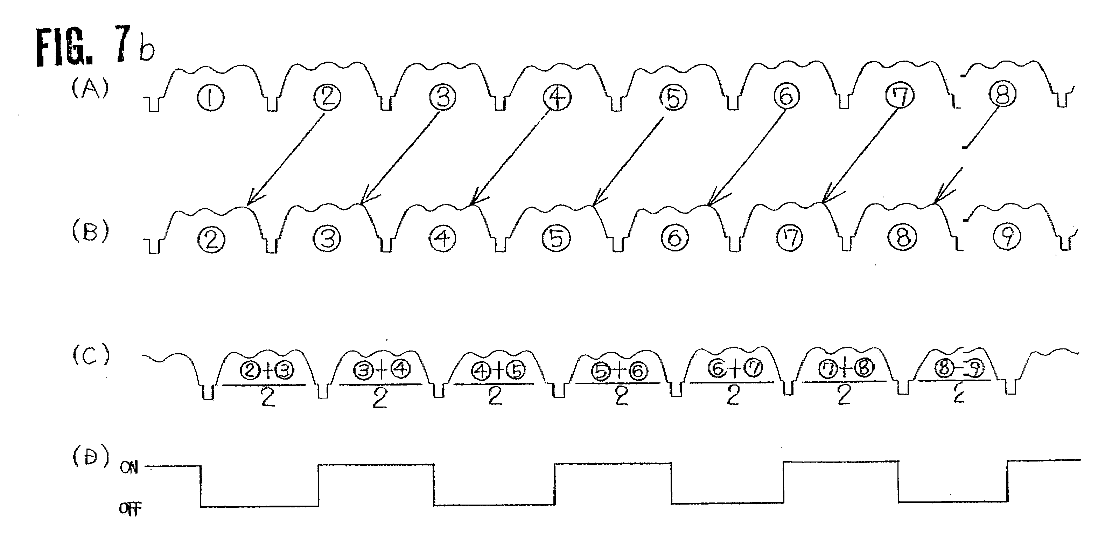

The signal interpolation circuit 33 comprises an input port 58, a 1H delayer 59, a 1/2 attenuator 60, a 0.5H delayer 61, a switch 62, a horizontal synchronous signal separator 63, a 1/2 frequency divider 64, a 0.5H delayer 65, and an output port 66 as shown in Fig. 7a. An input signal supplied to the input port 58 (Fig. 7b-A) is delayed 1H by the delayer 59 (Fig. 7b-B) and added with the input signal A. Then, the summed signal is recovered in amplitude by the 1/2 attenuator 60 and delayed 0.5H by the delayer 61 (Fig. 7b-C) before transmitted to the switch 62. The switch 62 is adapted to repeat ON/OFF action at 1H intervals in response to a signal (Fig. 7b-D) which is given by 1/2 frequency dividing the horizontal synchronous signal followed by a 0.5H delay. Accordingly, the dotted o horizontal scanning line J1 is obtained from the equation (D1 + D2)/2. Each array of the dotted o horizontal scanning lines through the second field (an even-number field) is thus obtained by summing up as shown in Fig. 6-B.

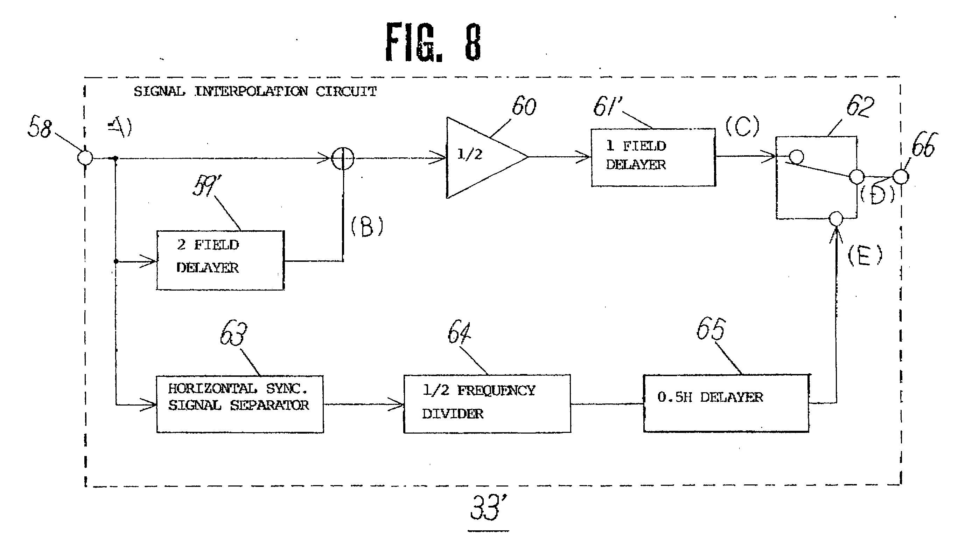

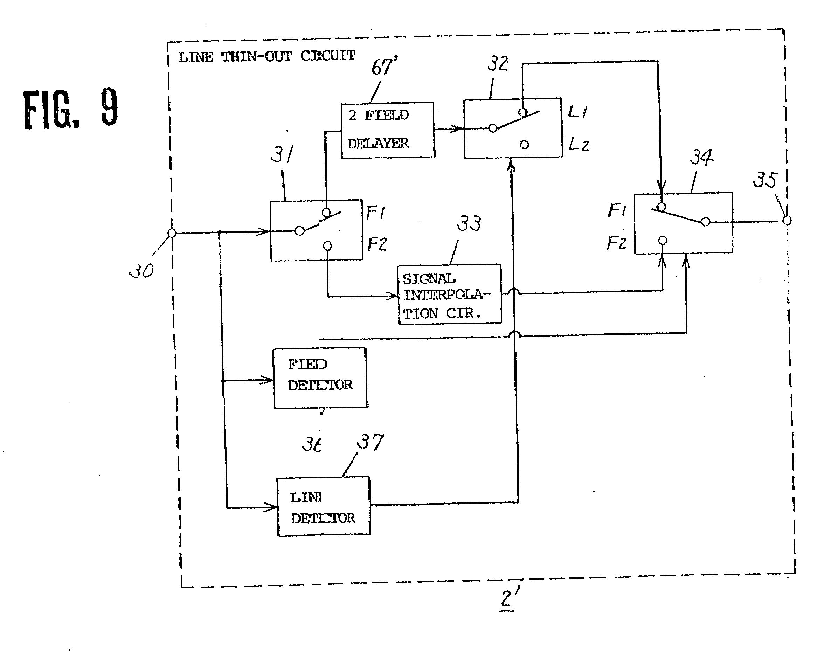

Fig. 6-A illustrates the scanning line arrangement of an input HDTV signal; Fig. 6-B illustrates the scanning line arrangement of an output signal from the line thin-out circuit; and Fig. 6-C is an enlarged view of the scanning line arrangement explaining an operation in the signal interpolation circuit 33. Although the scanning line J1 is produced by the signal interpolation circuit 33 from the preceding and following scanning lines D1, D2 existing in the same field, it may be obtained by arithmetical interpolation (E2 + G2)/2 wherein E2 is the scanning line of a first field represented by the ● mark while G2 is of a third field represented by the ● mark, as shown in Fig. 6-C, with the use of a plurality of field memories and a calculator circuit. For example, the 1H delayer 67 of Fig. 5 may be replaced by a 2-field delayer as shown in Fig. 9 and also, the 1H and 0.5H delayers 59, 61 of Fig. 7a may be replaced by a 2-field delayer and a 1-field delayer respectively as shown in Fig. 8. Also, the scanning line J1 may be given by interpolation using adjacent scanning lines E1, E2, E3, D1, D2, G1, G2, G3, and so on with the use of a plurality of line memories (not shown) and a calculator circuit (not shown).

In Fig. 5, a field detector 36 determines whether an input HDTV signal is of a first field or a second field (i.e. for an odd-number field or an even-number field). As the field detector 36 operates in the known manner on the basis of phase relationship between the vertical and horizontal synchronous signals, its description will be omitted. The output signal of the field detector 36 causes both the field and output switches 31, 34 to select their respective terminals F1 upon detection of the first field and the terminals, F2 upon detection of the second field. Also, there is provided a line detector 32 for identifying the number of a given line, which will then cause the line switch 32 to turn to L1 if the number is an odd number.

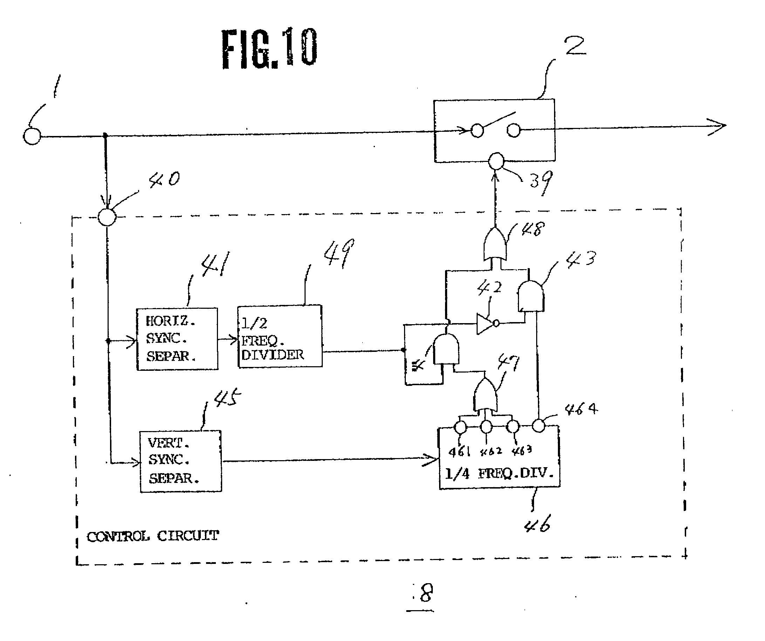

The line thin-out circuit 2 in another form and the control circuit 38 will be described in detail with reference to the block diagram of Fig. 10. This line thin-out circuit 2 incorporates a switch having a control input port 39. The control circuit 38 comprises an input port 40, a horizontal synchronous signal separator 41, a 1/2 frequency divider 49, an inverter 42, two AND circuits 43 and 44, a vertical synchronous signal separator 45, a 1/4 frequency divider 46, and two OR circuits 47 and 48. The 1/4 frequency divider 49 has four output ports 461, 462, 463 and 464 for transmitting of their respective four output signals sequentially 90° phase-shifted, each of which is 1/4 times the inputted signal in frequency. The HDTV signal inputted through the input port 1 is supplied via the input port 40 of the control circuit 38 to both the horizontal and vertical synchronous signal separators 41, 45. A horizontal synchronous signal separated by the horizontal synchronous separator 41 is transmitted, after divided to a half by the 1/2 frequency divider 49, to the AND circuit 44, and as an opposite polarity signal via the inverter 42 to the AND circuit 43. On the other hand, a vertical synchronous signal separated by the vertical synchronous signal separator 45 is transmitted to the 1/4 frequency divider 46. Suppose that an arbitrary field where a television signal is present be designated as a first field and the subsequent three fields as second, third and fourth fields, and that the field after the fourth field be a next first filed. Output signals of the 1/4 frequency divider 46 comes out respectively from the output port 461 when the television signal is at the first field, from the port 462 when it is at the second field, from the port 463 when it is at the third field, and from the port 464 when it is at the fourth field. The output signals for the first, second, and third fields from the 1/4 frequency divider 46 are supplied via the OR circuit 47 to the AND circuit 44. This allows the output signal from the 1/2 frequency divider 49 to pass the OR circuit 48 and reach the control port 39. When the television signal is at the fourth field, the output signal from the output port 464 of the frequency divider 46 is supplied to the AND circuit 43 and thus, the opposite polarity signal produced by the 1/2 frequency demultiplier 49 and the inverter 42 passes the OR circuit 48 to the control port 39. The line thin-out circuit 2 is then actuated by the respective input signals to the control port 39.

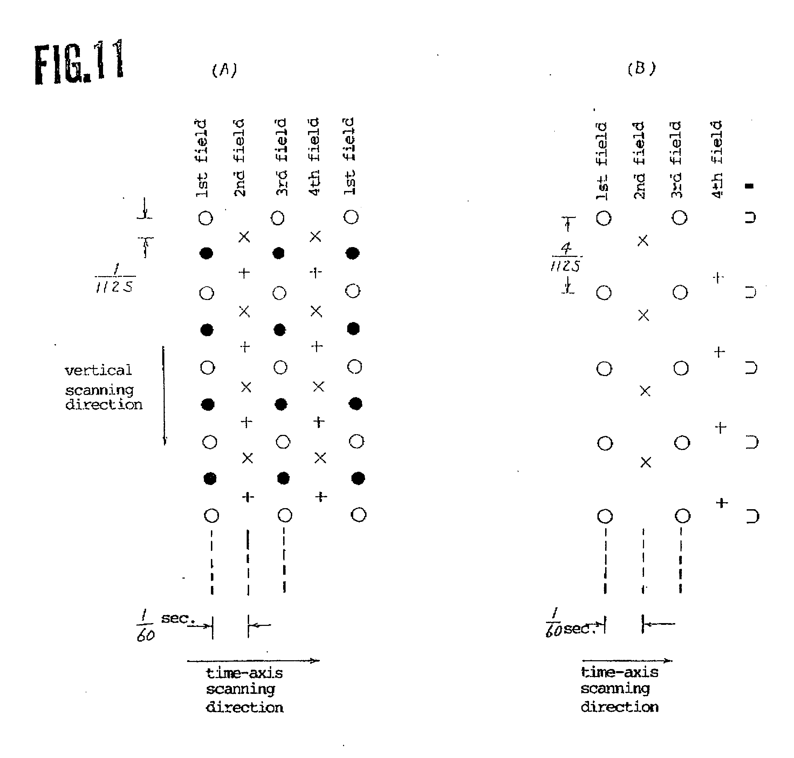

The operation of the line thin-out circuit 2 will be described with reference to the scanning line diagrams of Figs. 11-A and 11-B. The o, ●, x and + marks of Fig. 11-A represent horizontal scanning lines of the input HDTV signal. The first and third fields are constituted by the o and ● mark scanning lines while the second and fourth fields are constituted by the x and + mark scanning lines. At the first and third (odd-number) fields, the o scanning lines only are selected by the line thin-out circuit 2. Thus, the horizontal scanning lines at the first and third (odd-number) fields are given as shown in Fig. 11-B. Similar line thin-out action is made with respect to the second field, in which the x mark scanning lines only are selected. At the fourth field, the —+— mark scanning lines are selected because of the opposite polarity of the control signal to the line thin-out circuit 2.

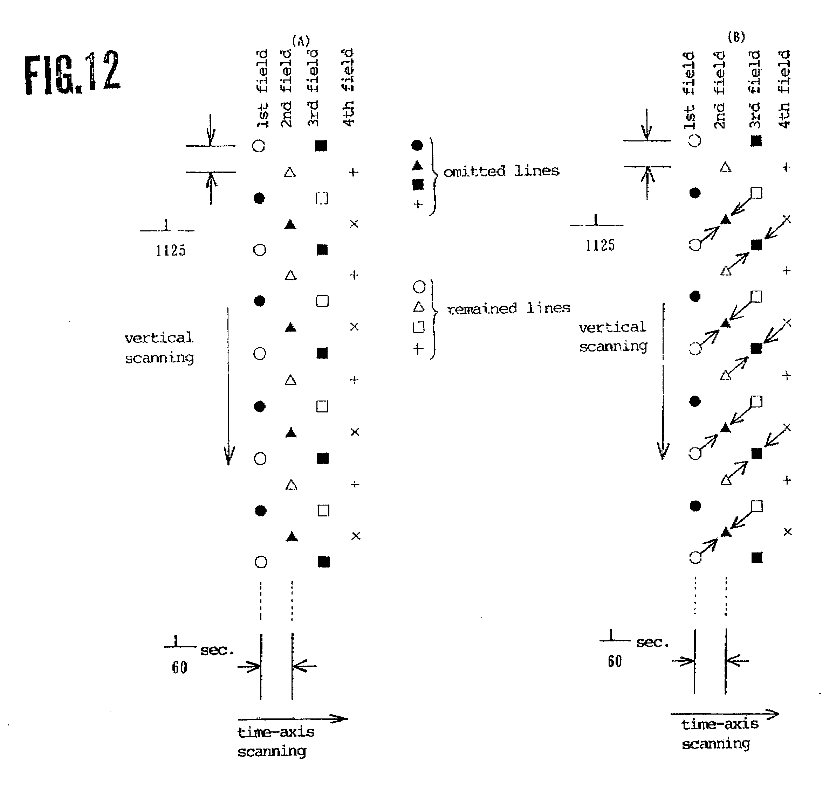

The line thin-out circuit 2 will be described in still another form with reference to the diagrams of scanning line shown in Figs. 12-A and 12-B. As shown in Fig. 12-A, the o, ●, △, ▲, □, ■, —+— and x marks represent horizontal scanning lines extending in such directions as at right angles to the sheet. When the fields are designated in the same manner as the above described four fields, the ●, ▲, ■ and x mark scanning lines are removed from the first, second, third and fourth fields respectively by the line thin-out circuit 2. Fig. 12-B shows that the ● mark scanning lines are removed from the first field while the o mark scanning lines remain. The waveform W and Y of Figs. 2-A and 2-B represent remaining scanning lines (designated by the o mark in Fig. 12-8) while the wave forms X and Z represent removed scanning lines (designated by the ● mark in Fig. 12-B). In respect to thin-out at the second, third and fourth field, the waveforms W and Y correspond to the scanning lines of mark ▲, ■ and x respectively. Similarly, the waveforms X and Z correspond to the scanning lines of △, □ and —+— at the second, third and fourth field respectively.

The interpolation with the interpolation circuit 28 can be made from the mean of the neighboring scanning lines in the preceding and following fields situated adjacent to the missed scanning line in the present field. More particularly, the mean of the lines situated at the proximal end of arrow marks of Fig. 12-B is used to represent the line situated at the distal end of the arrow mark. Signals in the preceding and following frames may be used for interpolation.

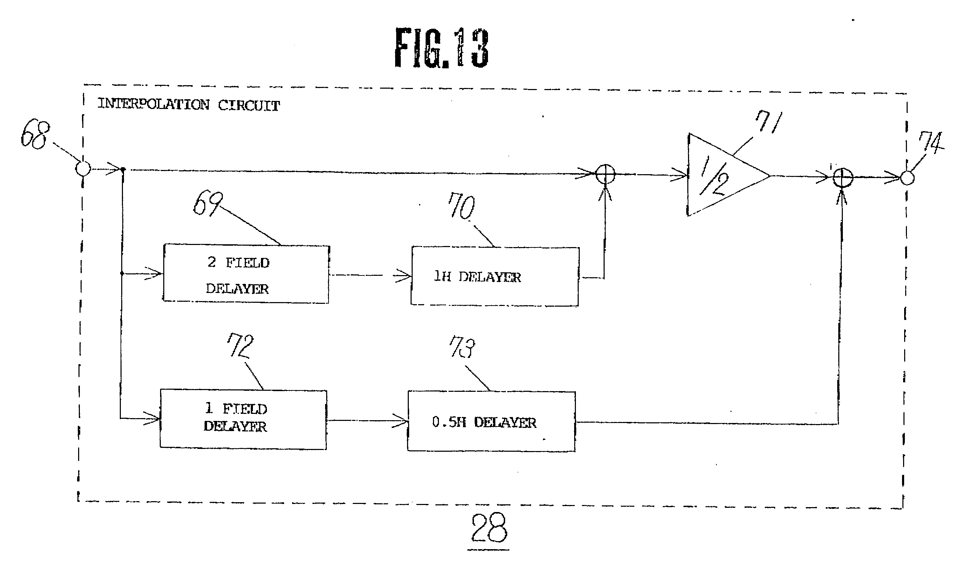

The interpolation circuit 28 comprises an input port 68, a 2-field delayer 69, a 1H delayer 70, a 1/2 attenuator 71, a 1-field delayer 72, and a 0.5H delayer 73 as shown in Fig. 13. A thinned video signal (with every other line omitted) input to the input port 68 is delayed by a measure of 2-field and 1H with the delayers 69 and 70 and then, added to the input signal. The addition signal is attenuated to a half in amplitude and then, summed up with a 0.5H and 1-field delayed signal derived from the delayers 72 and 73. As a result, the missed lines of the video signal can be interpolated.

## Claims

1. A video signal recording and reproducing apparatus comprising:
line thin-out means for omitting predetermined lines of an input video signal;
time-expansion means for time-expanding an output signal of the line thin-out means by a measure of time corresponding to a thin-out ratio determined by the line thin-out means;
modulating means for converting an output signal of the time-expansion means into a recordable video signal;
recording and reproducing means for recording the recordable video signal onto a recording medium and for reproducing the recorded signal from the recording medium;
demodulating means for demodulating a reproduced signal from the recording and reproducing means;
time-compression means for returning an output signal of the demodulating means to the original time-axis; and
interpolation means for interpolating the omitted lines of an output signal of the time-compression means.

2. A video signal recording apparatus comprising:
thin-out means for omitting predetermined lines in one of two consecutive fields of an input video signal;
interpolation means for generating by interpolation in the other of the two consecutive fields signals of lines corresponding to the omitted lines in the one of the two consecutive fields;
time-expansion means for time-expanding output signals of the thin-out means and the interpolation means;
modulating means for converting an output signal of the time-expansion means into a recordable video signal; and
recording means for recording the recordable signal onto a recording medium.

3. A video signal recording apparatus comprising:
first thin-out means for omitting predetermined lines in each even-numbered field counted from an arbitrary field where a video signal is present;
second thin-out means for omitting in each odd-numbered field lines different from the predetermined lines;
time-expansion means for time-expanding output signals of the first and second thin-out means;
modulating means for converting an output signal of the time-expansion means into a recordable video signal; and
recording means for recording the recordable video signal onto a recording medium.

4. A video signal recording and reproducing apparatus comprising:
line thin-out means for omitting every other line of an input video signal in a first field of two consecutive fields of the input video signal omitting in a second field of the two consecutive field every other line different from the omitted lines in the first field;
time-expansion means for time-expanding an output signal of the line thin-out means by two-times;
modulating means for converting an output signal of the time-expansion means into a recordable video signal;
recording and reproducing means for recording the recordable signal onto a recording medium and reproducing the recorded signal from the recording medium;
demodulating means for demodulating a reproduced signal from the recording and reproducing means;
time-compression means for returning an output signal of the demodulating means to the original time-axis; and

interpolation means for interpolating the omitted lines of an output signal of the time-compression means by interpolation signals derived from the output signal of the time-compression means.

# FIG. 1

EP 0 332 381 A1

# FIG. 2

EP 0 332 381 A1

# FIG. 3

TIME-EXPANSION CIRCUIT

LINE MEMORY 6

LINE MEMORY 7

HORIZONTAL SYNC. SIGNAL SEPARATOR

1/2 FREQUENCY DIVIDER

WRITE CLOCK GENERATOR

READOUT CLOCK GENERATOR

EP 0 332 381 A1

# FIG. 4 *a*

INTERPOLATION CIRCUIT

50  (A)

52   53   (C)   54   57

1/2   1H DELAYER   (D)

51

2H DELAYER

(B)

55   56

HORIZONTAL SYNC. SIGNAL SEPARATOR   1/2 FREQUENCY DIVIDER

28

EP 0 332 381 A1

FIG. 4 b

(A), (B), (C), (D), (E) S5 S6

EP 0 332 381 A1

FIG. 5

LINE IN-OUT CIRCUIT

1H DELAYER  67

32  L1  L2

31  F1  F2

30

33  SIGNAL INTERPOLATION CIR.

34  F1  F2  35

FIELD DETECTOR  36

LINE DETECTOR  37

2

EP 0 332 381 A1

FIG. 6

# FIG. 7 *a*

SIGNAL INTERPOLATION CIRCUIT

(A)  58

59  1H DELAYER

(B)

60  1/2

61  0.5H DELAYER  (C)

62  (D)  66

(E)

63  HORIZONTAL SYNC. SIGNAL SEPARATOR

64  1/2 FREQUENCY DIVIDER

65  0.5H DELAYER

33

EP 0 332 381 A1

# FIG. 7 b

(A)

①　②　③　④　⑤　⑥　⑦　⑧

(B)

②　③　④　⑤　⑥　⑦　⑧　⑨

(C)

$$\frac{②+③}{2} \quad \frac{③+④}{2} \quad \frac{④+⑤}{2} \quad \frac{⑤+⑥}{2} \quad \frac{⑥+⑦}{2} \quad \frac{⑦+⑧}{2} \quad \frac{⑧-⑨}{2}$$

(D) ON

OFF

EP 0 332 381 A1

FIG. 8

SIGNAL INTERPOLATION CIRCUIT

33'

EP 0 332 381 A1

FIG. 9

LINE THIN-OUT CIRCUIT

2 FIELD DELAYER — 67'

32

L1

L2

31

F1

F2

33

SIGNAL INTERPOLA-TION CIR.

34

F1

F2

35

30

FIED DETECTOR

36

LINE DETECTOR

37

2'

EP 0 332 381 A1

# FIG.10

CONTROL CIRCUIT

8

EP 0 332 381 A1

FIG.11

(A)

1st field
4th field
3rd field
2nd field
1st field

$\frac{1}{1125}$

vertical
scanning
direction

$\frac{1}{60}$ sec.

time-axis
scanning
direction

(B)

4th field
3rd field
2nd field
1st field

$\frac{4}{1125}$

$\frac{1}{60}$ sec.

time-axis
scanning
direction

# FIG.12

(A)

1st field ○ ● ○ ● ○ ● ○ ● ○
2nd field △ ◀ △ ◀ △ ◀ △ ◀
3rd field ■ □ ■ □ ■ □ ■ □ ■
4th field + × + × + × + ×

$\dfrac{1}{1125}$

vertical scanning

$\dfrac{1}{60}$ sec.

time-axis scanning

(B)

1st field ○ ● ○ ● ○ ● ○ ● ○
2nd field △ ◀ △ ◀ △ ◀ △ ◀
3rd field ■ □ ■ □ ■ □ ■ □ ■
4th field + × + × + × + ×

omitted lines ● ◀ ■ +

remained lines ○ △ □ +

$\dfrac{1}{1125}$

vertical scanning

$\dfrac{1}{60}$ sec.

time-axis scanning

# FIG.13

EP 0 332 381 A1

| Category | Citation of document with indication, where appropriate, of relevant passages | Relevant to claim | CLASSIFICATION OF THE APPLICATION (Int. Cl.⁴) |
|---|---|---|---|

**DOCUMENTS CONSIDERED TO BE RELEVANT** — EP 89302234.3

| X | US - A - 4 574 300 (HULYER)<br>    * Abstract; fig. 8-12; column 1, lines 21-31 * | 1 | H 04 N 9/80<br>H 04 N 11/00 |
| A | EP - A2 - 0 190 919 (SONY)<br>    * Fig. 2,3A,3B,16; page 3, line 25 - page 4, line 14; page 6, line 22 - page 8, line 6; page 13, line 18 - page 16, line 4 * | 1-4 | |
| A | EP - A2 - 0 114 694 (BOSCH)<br>    * Abstract; fig. 1,3,4; page 3, line 7 - page 5, line 17; page 7, line 1 - page 9, last line * | 1-4 | |
| A | EP - A2 - 0 241 227 (MATSUSHITA)<br>    * Abstract; fig. 4; page 4, line 62 - page 6, line 30 * | 1-4 | TECHNICAL FIELDS SEARCHED (Int. Cl.⁴)<br><br>H 04 N 5/00<br>H 04 N 7/00<br>H 04 N 9/00<br>H 04 N 11/00 |
| A | FERNSEH- UND KINO-TECHNIK, vol. 39, nos. 3,4, 1985, Heidelberg, DE<br>E.GÜTTNER "Konzeption zur kompatiblen Verbesserung der Bildqualität bei PAL-Übertragung"<br>pages 115-122,187-193<br>    * Page 116, pt. 2.1,2.2 * | 1 | |

The present search report has been drawn up for all claims

| Place of search | Date of completion of the search | Examiner |
|---|---|---|
| VIENNA | 29-05-1989 | DIMITROW |